# FASCICULE DE BREVET EUROPEEN

(11) **EP 3 015 924 B1**
(45) Date de publication et mention de la délivrance du brevet: **09.08.2017**
(21) Numéro de dépôt: 14191478.8
(22) Date de dépôt: 03.11.2014
(51) Int. Cl.: G04B 13/00, F16H 48/05

(54) **Différentiel, notamment pour l'horlogerie**
Ausgleichsgetriebe, insbesondere für Uhrwerke
Differential, in particular for timepieces

(43) Date de publication de la demande: 04.05.2016
(73) Titulaire: Antoine Preziuso Genève SA, 1228 Plan-les-Ouates (CH)
(72) Inventeur: Preziuso, Florian, 1233 Bernex (CH)
(74) Mandataire: Micheli & Cie SA

(56) Documents cités:
- EP-A1- 2 615 504
- WO-A1-2011/058157
- CN-U- 203 309 053
- ES-A1- 2 188 421
- FR-A1- 2 314 405
- US-A- 2 851 905

## Description

La présente invention concerne un mécanisme horloger comprenant un différentiel. Plus particulièrement, la présente invention concerne un tel différentiel comprenant une entrée et au moins trois sorties ou, inversement, au moins trois entrées et une sortie.

Un différentiel de type sphérique à trois entrées et une sortie est décrit dans la demande de brevet WO 2011/058157 et illustré à la figure 5 de cette dernière. Il comprend un premier satellite qui tourne autour d'un axe perpendiculaire et solidaire de l'arbre du différentiel et qui engrène avec une première et une deuxième roue mobiles autour de l'arbre, et un deuxième satellite qui tourne autour d'un axe perpendiculaire à l'arbre du différentiel et solidaire de la deuxième roue, le deuxième satellite engrenant avec une troisième et une quatrième roue mobiles autour de l'arbre. Ce différentiel comprend ainsi deux étages roues-satellite, soit un étage de plus qu'un différentiel classique à deux entrées et une sortie. La première, la troisième et la quatrième roue comprennent chacune une denture d'entrée. L'arbre comprend une denture de sortie. Trois barillets engrènent avec les dentures d'entrée du différentiel, tandis que la denture de sortie est reliée à un affichage. Les barillets sont reliés à trois balanciers respectifs, de sorte que la vitesse de rotation de l'arbre du différentiel est fonction des vitesses de rotation des barillets, lesquelles vitesses sont définies par les fréquences des balanciers.

Ce différentiel selon la demande WO 2011/058157 semble convenir dans l'application visée, à savoir moyenner les vitesses de rotation de trois barillets alimentant les oscillations de trois balanciers respectifs. Utiliser ce différentiel dans l'autre sens, en tant que différentiel à une entrée (l'arbre) et trois sorties (la première, la troisième et la quatrième roue), pour permettre par exemple à trois balanciers alimentés par une même source d'énergie d'osciller avec des variations de fréquence entre eux, est en revanche plus difficile. Dans ce cas, en effet, le système se déséquilibre dès que l'un des balanciers oscille à une fréquence un peu différente de la fréquence des deux autres balanciers, les forces se répartissant mal entre les balanciers. Si l'un des balanciers s'arrête, la montre peut même ne plus fonctionner.

La présente invention vise à remédier au problème susmentionné, et propose à cette fin un mécanisme horloger comprenant un différentiel comprenant :
- un arbre d'entrée/sortie,
- un premier, un deuxième, un troisième et un quatrième organe rotatif montés mobiles autour de l'arbre et les uns par rapport aux autres, le premier et le deuxième organe rotatif définissant respectivement une première et une deuxième sortie/entrée du différentiel, le troisième ou le quatrième organe rotatif définissant une troisième sortie/entrée du différentiel,
- un premier satellite associé au premier organe rotatif et formant avec ce dernier un premier étage du différentiel,
- un deuxième satellite associé au deuxième organe rotatif et formant avec ce dernier un deuxième étage du différentiel relié au premier étage par le troisième organe rotatif, et
- un troisième satellite associé au quatrième organe rotatif et formant avec ce dernier un troisième étage du différentiel, ce troisième étage reliant le premier et le deuxième étage l'un à l'autre.

Les termes « premier » à « quatrième » utilisés ci-dessus servent uniquement à distinguer différents éléments du différentiel. Ils ne doivent nullement être interprétés comme indiquant une position axiale relative desdits éléments.

De préférence, une denture d'entrée/sortie est solidaire de l'arbre d'entrée/sortie, le premier et le deuxième organe rotatif comprennent respectivement une première et une deuxième denture de sortie/entrée, et le troisième ou quatrième organe rotatif comprend une troisième denture de sortie/entrée. Le troisième organe rotatif peut comprendre la troisième denture de sortie/entrée et le quatrième organe rotatif peut comprendre une quatrième denture de sortie/entrée.

De préférence, le troisième étage est situé entre le premier et le deuxième étage.

De préférence également, le quatrième organe rotatif et le troisième satellite sont situés au moins partiellement à l'intérieur du troisième organe rotatif.

Selon un premier mode de réalisation de l'invention, le premier organe rotatif porte le premier satellite, le deuxième organe rotatif porte le deuxième satellite, le quatrième organe rotatif porte le troisième satellite et est relié par engrenage avec le deuxième satellite, le troisième satellite est relié par engrenage avec l'arbre et avec le premier satellite, et le troisième organe rotatif est relié par engrenage avec le premier satellite et avec le deuxième satellite.

Le quatrième organe rotatif peut comprendre une denture qui engrène directement avec le deuxième satellite.

Outre la troisième denture de sortie/entrée, le troisième organe rotatif peut comprendre des dentures qui engrènent directement, respectivement, avec le premier et le deuxième satellite.

Le premier et le troisième satellite peuvent engrener l'un avec l'autre par l'intermédiaire d'un mobile monté autour de l'arbre.

Le troisième satellite peut engrener directement avec une denture solidaire de l'arbre.

Selon un deuxième mode de réalisation de l'invention, le premier, le deuxième et le troisième satellite sont chacun pivotants autour d'un axe perpendiculaire à l'arbre, le premier satellite engrène avec le premier et le troisième organe rotatif et son axe est solidaire du quatrième organe rotatif, le deuxième satellite engrène avec le deuxième et le troisième organe rotatif et son axe est solidaire d'un cinquième organe rotatif monté mobile autour de l'arbre, et le troisième satellite engrène avec le quatrième et le cinquième organe rotatif et son axe est solidaire de l'arbre.

De préférence, l'arbre est creux pour permettre le passage d'arbres d'aiguilles indicatrices.

D'autres caractéristiques et avantages de la présente invention apparaîtront à la lecture de la description détaillée suivante faite en référence aux dessins annexés dans lesquels :
- la figure 1 est une vue en coupe d'un différentiel selon un premier mode de réalisation de l'invention ;
- les figures 2 et 3 sont respectivement des vues en coupe et en perspective d'un différentiel selon un deuxième mode de réalisation de l'invention.

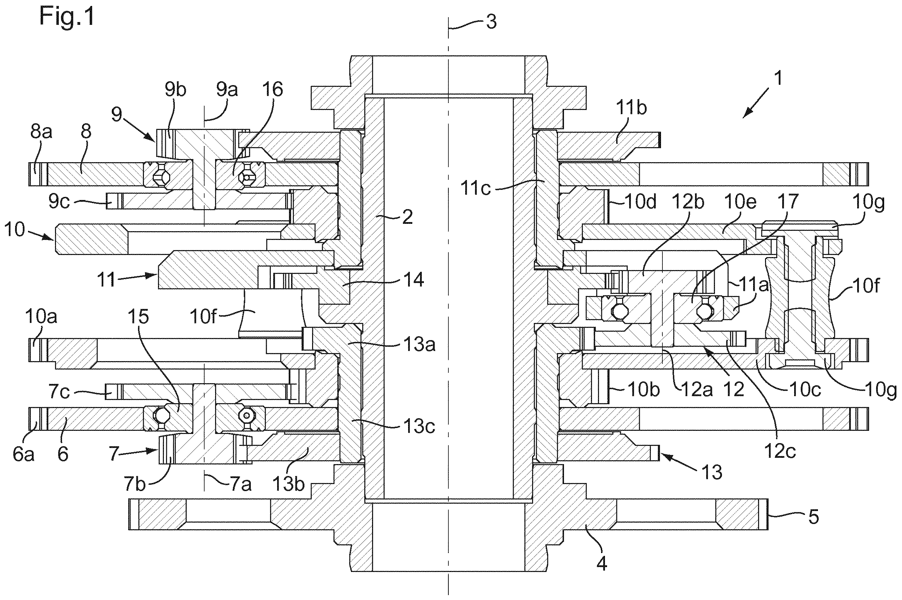

En référence à la figure 1, un différentiel selon un premier mode de réalisation de l'invention, désigné par le repère 1, est de type planétaire. Il comprend un arbre d'entrée 2 rotatif autour d'un axe 3. Une roue d'entrée 4 est montée sur l'arbre 2 de manière fixe par rapport à ce dernier. La roue d'entrée 4 comprend à sa périphérie une denture d'entrée 5. Le différentiel 1 comprend en outre un premier porte-satellite 6 portant un premier satellite 7, un deuxième porte-satellite 8 portant un deuxième satellite 9, un bâti rotatif 10 situé entre le premier et le deuxième porte-satellite 6, 8 et reliant le premier et le deuxième satellite 7, 9 l'un à l'autre, et un troisième porte-satellite 11 situé lui aussi entre le premier et le deuxième porte-satellite 6, 8 et portant un troisième satellite 12. Le premier, le deuxième et le troisième porte-satellite 6, 8, 11 ainsi que le bâti rotatif 10 sont montés autour de l'arbre d'entrée 2 et sont mobiles en rotation autour de l'axe 3 les uns par rapport aux autres et par rapport à l'arbre 2. Le premier porte-satellite 6, le deuxième porte-satellite 8 et le bâti rotatif 10 comprennent chacun à leur périphérie une denture de sortie 6a, 8a, 10a. Le bâti rotatif 10 comprend un premier pignon 10b, une première roue 10c fixée au premier pignon 10b, un deuxième pignon 10d et une deuxième roue 10e fixée au deuxième pignon 10d, la deuxième roue 10e étant rendue solidaire de la première roue 10c par des piliers 10f maintenus par des vis 10g. La première roue 10c du bâti rotatif 10 comprend à sa périphérie ladite denture de sortie 10a. Le troisième porte-satellite 11 engrène avec le deuxième satellite 9, tandis que le troisième satellite 12 est relié au premier satellite 7 via un mobile intermédiaire 13 et engrène en outre avec un pignon 14 solidaire de l'arbre 2. Le troisième porte-satellite 11 comprend un support 11 a constituant le porte-satellite proprement dit, une roue 11 b et un canon 11 c solidarisant le support 11 a et la roue 11 b.

Le mobile intermédiaire 13 est monté rotatif autour de l'arbre 2 (c'est-à-dire mobile en rotation par rapport à l'arbre 2) et comprend un pignon 13a et une roue 13b solidarisés par un canon 13c. Autour du canon 13c est monté rotatif le premier porte-satellite 6, qui se présente sous la forme d'un plateau. Le premier satellite 7 est, lui, sous la forme d'un mobile dont l'axe 7a est parallèle à l'axe 3 du différentiel et qui comprend un pignon 7b et une roue 7c, le pignon 7b engrenant avec la roue 13b du mobile intermédiaire 13, la roue 7c engrenant avec le premier pignon 10b du bâti rotatif 10. Le premier satellite 7 est rotatif par rapport au premier porte-satellite 6 autour de son axe 7a, lequel est solidaire du premier porte-satellite 6. Le premier satellite 7 peut être monté sur le premier porte-satellite 6 par l'intermédiaire d'un roulement 15, tel qu'un roulement à billes, comme représenté.

Le premier pignon 10b du bâti rotatif 10 est monté rotatif autour du canon 13c du mobile intermédiaire 13. Le deuxième pignon 10d du bâti rotatif 10 est monté rotatif autour du canon 11 c du troisième porte-satellite 11, lequel canon 11 c est lui-même monté rotatif autour de l'arbre 2. Le deuxième porte-satellite 8 est sous la forme d'un plateau monté rotatif autour du canon 11 c. Le deuxième satellite 9 est, lui, sous la forme d'un mobile dont l'axe 9a est parallèle à l'axe 3 du différentiel et qui comprend un pignon 9b et une roue 9c, le pignon 9b engrenant avec la roue 11 b du troisième porte-satellite 11, la roue 9c engrenant avec le deuxième pignon 10d du bâti rotatif 10. Le deuxième satellite 9 est rotatif par rapport au deuxième porte-satellite 8 autour de son axe 9a, lequel est solidaire du deuxième porte-satellite 8. Le deuxième satellite 9 peut être monté sur le deuxième porte-satellite 8 par l'intermédiaire d'un roulement 16, tel qu'un roulement à billes, comme représenté.

Le troisième satellite 12 est sous la forme d'un mobile dont l'axe 12a est parallèle à l'axe 3 du différentiel et qui comprend un pignon 12b et une roue 12c, le pignon 12b engrenant avec le pignon 14 de l'arbre 2, la roue 12c engrenant avec le pignon 13a du mobile intermédiaire 13. Le troisième satellite 12 est rotatif par rapport au troisième porte-satellite 11 autour de son axe 12a, lequel est solidaire du troisième porte-satellite 11. Le troisième satellite 12 peut être monté sur le troisième porte-satellite 11 par l'intermédiaire d'un roulement 17, tel qu'un roulement à billes, comme représenté. Le support 11a du troisième porte-satellite 11 et le troisième satellite 12 sont avantageusement situés dans le bâti rotatif 10, plus précisément entre la première et la deuxième roue 10c, 10e du bâti rotatif 10.

Ainsi, le différentiel 1 comprend une denture d'entrée 5 et trois dentures de sortie 6a, 8a, 10a. En plus du premier étage que forment le premier porte-satellite 6 et le premier satellite 7 et du deuxième étage que forment le deuxième porte-satellite 8 et le deuxième satellite 9, le différentiel 1 comprend un troisième étage ou étage intermédiaire formé par le troisième porte-satellite 11, plus particulièrement son support 11a, et le troisième satellite 12. Ce troisième étage relie le premier et le deuxième étage, plus précisément le premier et le deuxième satellite 7, 9, en plus et indépendamment du bâti rotatif 10 qui lui aussi relie le premier et le deuxième étage. De la sorte, tout surplus de force au niveau de l'une des sorties est immédiatement réparti entre les trois sorties si bien que le système reste équilibré. En particulier, un arrêt d'une ou de deux sorties est possible sans que cela entraîne un arrêt des deux autres sorties ou de l'autre sortie, le différentiel pouvant ainsi continuer à fonctionner.

Les rapports d'engrenage dans le différentiel 1 peuvent être choisis pour qu'une rotation de l'arbre d'entrée 2 fasse normalement tourner les dentures de sortie 6a, 8a, 10a à la même vitesse, ou à des vitesses volontairement différentes.

Comme visible sur la figure 1, l'arbre d'entrée 2 et la roue d'entrée 4 peuvent être creux pour former un passage traversant central le long de l'axe 3 à travers lequel peut passer, par exemple, les arbres des aiguilles d'un affichage horaire. Ainsi, le différentiel selon l'invention peut être placé au centre d'un mouvement horloger, et donc ne pas générer de balourd. La roue d'entrée 4 peut recevoir, par l'intermédiaire d'un rouage de finissage, une force venant d'un ou plusieurs barillets. Les dentures de sortie 6a, 8a, 10a peuvent engrener, éventuellement par l'intermédiaire de renvois, avec des pignons d'échappement pour entretenir les oscillations de trois oscillateurs correspondants, ou avec des cages de tourbillon pour faire tourner ces cages. Dans de telles applications, le différentiel selon l'invention permet aux différents oscillateurs d'osciller à des fréquences différentes, par exemple pendant une période transitoire avant que ces oscillateurs entrent en résonance pour osciller à une fréquence commune. Le différentiel selon l'invention peut notamment être utilisé dans un mouvement du type décrit dans le brevet EP 1918790, c'est-à-dire un mouvement comprenant un plateau tournant entraîné par le rouage de finissage et portant trois tourbillons qui tournent par rapport au plateau. Dans ce cas, la roue d'entrée 4 et donc l'arbre d'entrée 2 peuvent être entraînés par le plateau tournant et chaque denture de sortie 6a, 8a, 10a peut être agencée pour entraîner une cage de tourbillon. D'autres applications du différentiel selon l'invention sont bien entendu possibles. De plus, le différentiel selon l'invention peut être utilisé dans l'autre sens. En d'autres termes, la roue 4 peut servir de sortie et les dentures 6a, 8a, 10a peuvent servir d'entrées. Par exemple, les dentures 6a, 8a, 10a peuvent recevoir des forces venant de trois barillets, forces qui sont moyennées à la sortie 4. Dans une telle application, lorsque l'un des barillets s'arrête, le différentiel selon l'invention permet aux deux autres barillets de continuer à transmettre leur force et donc à la montre de continuer à fonctionner.

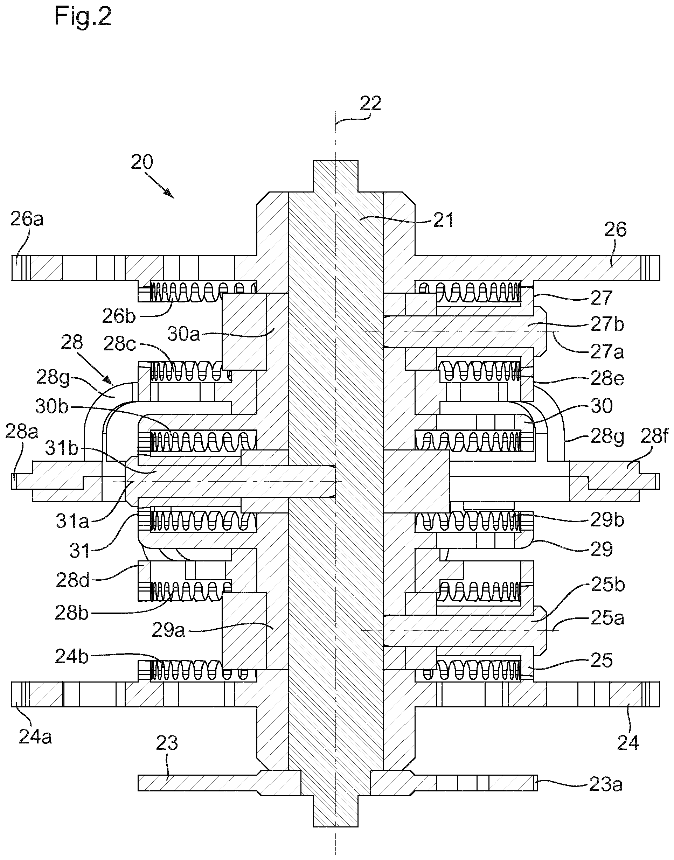

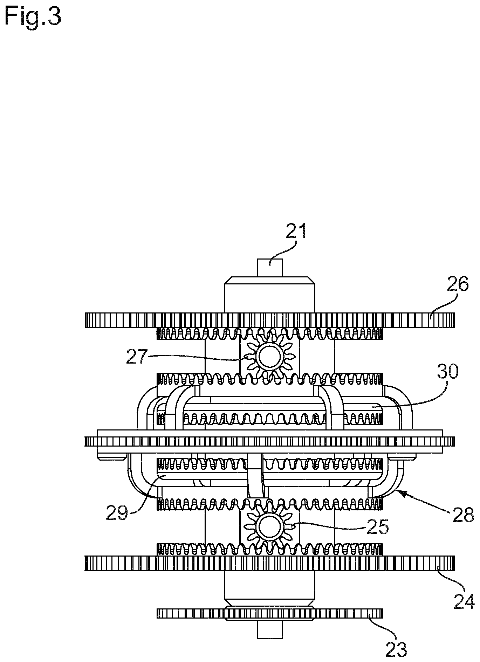

En référence aux figures 2 et 3, un différentiel selon un deuxième mode de réalisation de l'invention, désigné par le repère 20, est de type sphérique. Il comprend un arbre d'entrée 21 rotatif autour d'un axe 22. Une roue d'entrée 23 est montée sur l'arbre 22 de manière fixe par rapport à ce dernier. La roue d'entrée 23 comprend à sa périphérie une denture d'entrée 23a. Le différentiel 20 comprend en outre une première roue 24 associée à un premier satellite 25, une deuxième roue 26 associée à un deuxième satellite 27, un bâti rotatif 28 situé entre la première et la deuxième roue 24, 26 et reliant le premier et le deuxième satellite 25, 27 l'un à l'autre, une troisième roue 29 reliée au premier satellite 25, une quatrième roue 30 reliée au deuxième satellite 27, et un troisième satellite 31 reliant la troisième et la quatrième roue 29, 30. La première, la deuxième, la troisième et la quatrième roue 24, 26, 29, 30 ainsi que le bâti rotatif 28 sont montés autour de l'arbre d'entrée 21 et sont mobiles en rotation autour de l'axe 22 les uns par rapport aux autres et par rapport à l'arbre 21. La première roue 24, la deuxième roue 26 et le bâti rotatif 28 comprennent chacun à leur périphérie une denture de sortie 24a, 26a, 28a.

Plus précisément, la première et la deuxième roue 24, 26 sont montées rotatives autour de l'arbre 21 et comprennent chacune, outre leur denture de sortie 24a, 26a, une denture verticale 24b, 26b. Le premier satellite 25 est sous la forme d'un pignon monté rotatif autour d'un axe 25a qui est perpendiculaire à l'axe 22 du différentiel 20. L'axe 25a est défini par une tige 25b autour de laquelle est monté ledit pignon de manière rotative. Une extrémité de la tige 25b est fixée à un canon 29a de la troisième roue 29, qui est montée rotative autour de l'arbre 21, rendant ainsi l'axe de rotation 25a du premier satellite 25 solidaire de la troisième roue 29. La denture du pignon formant le satellite 25 engrène avec la denture verticale 24b de la première roue 24 et avec une première denture verticale 28b du bâti rotatif 28. Le deuxième satellite 27 est sous la forme d'un pignon monté rotatif autour d'un axe 27a qui est perpendiculaire à l'axe 22 du différentiel 20. L'axe 27a est défini par une tige 27b autour de laquelle est monté ledit pignon de manière rotative. Une extrémité de la tige 27b est fixée à un canon 30a de la quatrième roue 30, qui est montée rotative autour de l'arbre 21, rendant ainsi l'axe de rotation 27a du deuxième satellite 27 solidaire de la quatrième roue 30. La denture du pignon formant le satellite 27 engrène avec la denture verticale 26b de la deuxième roue 26 et avec une deuxième denture verticale 28c du bâti rotatif 28.

Le bâti rotatif 28 comprend deux roues 28d, 28e définissant respectivement la première et la deuxième denture verticale 28b, 28c et une troisième roue 28f définissant la denture de sortie 28a et rendue solidaire des roues 28d, 28e par des arcs de liaison 28g. Les roues 28d, 28e du bâti 28 sont montées rotatives autour respectivement du canon 29a de la troisième roue 29 et du canon 30a de la quatrième roue 30. La troisième et la quatrième roue 29, 30 sont situées dans le bâti 28, entre les roues 28d, 28e, et comprennent chacune une denture verticale 29b, 30b. Le troisième satellite 31 est sous la forme d'un pignon monté rotatif autour d'un axe 31 a qui est perpendiculaire à l'axe 22 du différentiel 20. L'axe 31 a est défini par une tige 31 b autour de laquelle est monté ledit pignon de manière rotative. Une extrémité de la tige 31 b est fixée à l'arbre 21, rendant ainsi l'axe de rotation 31 a du troisième satellite 31 solidaire de l'arbre 21. La denture du pignon formant le satellite 31 engrène avec la denture verticale 29b de la troisième roue 29 et avec la denture verticale 30b de la quatrième roue 30.

Le différentiel 20 fonctionne de la même manière que le différentiel 1 selon le premier mode de réalisation. Ce dernier présente toutefois l'avantage d'un plus faible encombrement.

Bien que cela ne soit pas visible sur la figure 2, l'arbre 21 pourrait être creux comme l'arbre 2 du premier mode de réalisation.

Dans le premier mode de réalisation, chaque porte-satellite 6, 8, 11 pourrait porter plusieurs satellites du type du satellite 7, 9, 12. De façon analogue, dans le deuxième mode de réalisation, chaque étage du différentiel pourrait comporter plusieurs satellites du type du satellite 25, 27, 31.

Par ailleurs, la denture de sortie 10a, respectivement 28a, pourrait être portée par le porte-satellite 11, respectivement par la troisième roue 29 ou la quatrième roue 30. Dans ce cas, c'est le porte-satellite 11, respectivement la troisième roue 29 ou la quatrième roue 30, qui définirait la troisième sortie du différentiel. En variante, on pourrait aussi avoir plus de trois sorties. Par exemple, en plus des trois dentures de sortie 6a, 8a, 10a portées par le premier et le deuxième porte-satellite 6, 8 et le bâti rotatif 10, le différentiel 1 pourrait comprendre une quatrième denture de sortie portée par le troisième porte-satellite 11. De façon analogue, en plus des trois dentures de sortie 24a, 26a, 28a portées par la première et la deuxième roue 24, 26 et le bâti rotatif 28, le différentiel 20 pourrait comprendre une quatrième denture de sortie portée par la troisième roue 29 et même une cinquième denture de sortie portée par la quatrième roue 30. De plus, chaque organe de sortie du différentiel pourrait porter plusieurs dentures de sortie solidaires mais ayant des diamètres et/ou des nombres de dents différents pour entraîner différents organes du mouvement horloger.

## Revendications

1. Mécanisme horloger comprenant un différentiel, le différentiel comprenant :
- un arbre d'entrée/sortie (2 ; 21),
- un premier, un deuxième, un troisième et un quatrième organe rotatif (6, 8, 10, 11 ; 24, 26, 28, 29) montés mobiles les uns par rapport aux autres, le premier et le deuxième organe rotatif (6, 8 ; 24, 26) définissant respectivement une première et une deuxième sortie/entrée (6a, 8a ; 24a, 26a) du différentiel, le troisième ou le quatrième organe rotatif (10, 11 ; 28, 29) définissant une troisième sortie/entrée (10a ; 28a) du différentiel,
- un premier satellite (7 ; 25) associé au premier organe rotatif (6 ; 24) et formant avec ce dernier un premier étage du différentiel,
- un deuxième satellite (9 ; 27) associé au deuxième organe rotatif (8 ; 26) et formant avec ce dernier un deuxième étage du différentiel et
- un troisième satellite (12 ; 31) associé au quatrième organe rotatif (11 ; 29) et formant avec ce dernier un troisième étage du différentiel, ce troisième étage reliant le premier et le deuxième étage l'un à l'autre, **caractérisé en ce que** lesdits premier, deuxième, troisième et quatrième organes rotatifs sont montés mobiles autour dudit arbre, et **en ce que** ledit deuxième étage est relié audit premier étage par ledit troisième organe rotatif.

2. Mécanisme horloger selon la revendication 1, dans lequel une denture d'entrée/sortie (5 ; 23a) est solidaire de l'arbre d'entrée/sortie (2 ; 21), le premier et le deuxième organe rotatif (6, 8 ; 24, 26) comprennent respectivement une première et une deuxième denture de sortie/entrée (6a, 8a ; 24a, 26a), et le troisième ou quatrième organe rotatif (10, 11 ; 28, 29) comprend une troisième denture de sortie/entrée (10a ; 28a).

3. Mécanisme horloger selon la revendication 2, dans lequel le troisième organe rotatif (10; 28) comprend ladite troisième denture de sortie/entrée (10a ; 28a).

4. Mécanisme horloger selon la revendication 3, dans lequel le quatrième organe rotatif (11 ; 29) comprend une quatrième denture de sortie/entrée.

5. Mécanisme horloger selon l'une quelconque des revendications 1 à 4, dans lequel le troisième étage est situé entre le premier et le deuxième étage.

6. Mécanisme horloger selon l'une quelconque des revendications 1 à 5, dans lequel le quatrième organe rotatif (11 ; 29) et le troisième satellite (12 ; 31) sont situés au moins partiellement à l'intérieur du troisième organe rotatif (10 ; 28).

7. Mécanisme horloger selon l'une quelconque des revendications 1 à 6, dans lequel le premier organe rotatif (6) porte le premier satellite (7), le deuxième organe rotatif (8) porte le deuxième satellite (9), le quatrième organe rotatif (11) porte le troisième satellite (12) et est relié par engrenage avec le deuxième satellite (9), le troisième satellite (12) est relié par engrenage avec l'arbre (2) et avec le premier satellite (7), et le troisième organe rotatif (10) est relié par engrenage avec le premier satellite (7) et avec le deuxième satellite (9).

8. Mécanisme horloger selon la revendication 7, dans lequel le quatrième organe rotatif (11, 11b) comprend une denture qui engrène directement avec le deuxième satellite (9).

9. Mécanisme horloger selon la revendication 7 ou 8, dans lequel le troisième organe rotatif (10, 10b, 10d) comprend des dentures qui engrènent directement, respectivement, avec le premier et le deuxième satellite (7, 9).

10. Mécanisme horloger selon l'une quelconque des revendications 7 à 9, dans lequel le premier et le troisième satellite (7, 12) engrènent l'un avec l'autre par l'intermédiaire d'un mobile (13) monté autour de l'arbre (2).

11. Mécanisme horloger selon l'une quelconque des revendications 7 à 10, dans lequel le troisième satellite (12) engrène directement avec une denture solidaire de l'arbre (2).

12. Mécanisme horloger selon l'une quelconque des revendications 1 à 6, dans lequel le premier, le deuxième et le troisième satellite (25, 27, 31) sont chacun pivotants autour d'un axe (25a, 27a, 31 a) perpendiculaire à l'arbre (21), le premier satellite (25) engrène avec le premier et le troisième organe rotatif (24, 28) et son axe (25a) est solidaire du quatrième organe rotatif (29), le deuxième satellite (27) engrène avec le deuxième et le troisième organe rotatif (26, 28) et son axe (27a) est solidaire d'un cinquième organe rotatif (30) monté mobile autour de l'arbre (21), et le troisième satellite (31) engrène avec le quatrième et le cinquième organe rotatif (29, 30) et son axe (31 a) est solidaire de l'arbre (21).

13. Mécanisme horloger selon l'une quelconque des revendications 1 à 12, dans lequel l'arbre (2 ; 21) est creux pour permettre le passage d'arbres d'aiguilles indicatrices.

## Patentansprüche

1. Uhrmechanismus, der ein Ausgleichsgetriebe umfasst, wobei das Ausgleichsgetriebe Folgendes umfasst:
- eine Antriebs/Abtriebswelle (2; 21),
- ein erstes, ein zweites, ein drittes und ein viertes drehbares Organ (6, 8, 10, 11; 24, 26, 28, 29), die in Bezug zueinander drehbar gelagert sind, wobei das erste und das zweite drehbare Organ (6, 8; 24, 26) jeweils einen ersten und einen zweiten Abtrieb/Antrieb (6a, 8a; 24a, 26a) des Ausgleichsgetriebes definieren, wobei das dritte oder das vierte drehbare Organ (10, 11; 28, 29) einen dritten Abtrieb/Antrieb (10a; 28a) des Ausgleichsgetriebes definieren,
- ein erstes Planetenrad (7; 25), das dem ersten drehbaren Organ (6; 24) zugehörig ist und mit diesem letzteren eine erste Stufe des Ausgleichsgetriebes bildet,
- ein zweites Planetenrad (9; 27), das dem zweiten drehbaren Organ (8; 26) zugehörig ist und mit diesem letzteren eine zweite Stufe des Ausgleichsgetriebes bildet, und
- ein drittes Planetenrad (12; 31), das dem vierten drehbaren Organ (11; 29) zugehörig ist und mit diesem letzteren eine dritte Stufe des Ausgleichsgetriebes bildet, wobei diese dritte Stufe die erste und die zweite Stufe miteinander verbindet, **dadurch gekennzeichnet, dass** das erste, zweite, dritte und vierte drehbare Organ drehbar um die Welle gelagert sind, und dadurch, dass die zweite Stufe mit der erste Stufe durch das dritte drehbare Organ verbunden ist.

2. Uhrmechanismus nach Anspruch 1, wobei eine Antriebs/Abtriebsverzahnung (5; 23a) fest mit der Antriebs/Abtriebswelle (2; 21) verbunden ist, wobei das erste und das zweite drehbare Organ (6, 8; 24, 26) eine erste beziehungsweise eine zweite Abtriebs/Antriebsverzahnung (6a, 8a; 24a, 26a) umfassen, und das dritte oder vierte drehbare Organ (10, 11; 28, 29) eine dritte Abtriebs/Antriebsverzahnung (10a; 28a) umfasst.

3. Uhrmechanismus nach Anspruch 2, wobei das dritte drehbare Organ (10; 28) die dritte Abtriebs/Antriebsverzahnung (10a; 28a) umfasst.

4. Uhrmechanismus nach Anspruch 3, wobei das vierte drehbare Organ (11; 29) eine vierte Abtriebs/Antriebsverzahnung umfasst.

5. Uhrmechanismus nach einem der Ansprüche 1 bis 4, wobei die dritte Stufe sich zwischen der ersten und der zweiten Stufe befindet.

6. Uhrmechanismus nach einem der Ansprüche 1 bis 5, wobei das vierte drehbare Organ (11; 29) und das dritte Planetenrad (12; 31) sich zumindest teilweise im Inneren des dritten drehbaren Organs (10; 28) befinden.

7. Uhrmechanismus nach einem der Ansprüche 1 bis 6, wobei das erste drehbare Organ (6) das erste Planetenrad (7) trägt, das zweite drehbare Organ (8) das zweite Planetenrad (9) trägt, das vierte drehbare Organ (11) das dritte Planetenrad (12) trägt und durch Zahneingriff mit dem zweiten Planetenrad (9) verbunden ist, das dritte Planetenrad (12) durch Zahneingriff mit der Welle (2) und mit dem ersten Planetenrad (7) verbunden ist und das dritte drehbare Organ (10) durch Zahneingriff mit dem ersten Planetenrad (7) und mit dem zweiten Planetenrad (9) verbunden ist.

8. Uhrmechanismus nach Anspruch 7, wobei das vierte drehbare Organ (11, 11b) eine Verzahnung umfasst, die direkt mit dem zweiten Planetenrad (9) ineinandergreift.

9. Uhrmechanismus nach Anspruch 7 oder 8, wobei das dritte drehbare Organ (10, 10b, 10d) Verzahnungen umfasst, die direkt mit dem ersten beziehungsweise dem zweiten Planetenrad (7, 9) ineinandergreifen.

10. Uhrmechanismus nach einem der Ansprüche 7 bis 9, wobei das erste und das dritte Planetenrad (7, 12) über ein Drehteil (13), das um die Welle (2) gelagert ist, ineinandergreifen.

11. Uhrmechanismus nach einem der Ansprüche 7 bis 10, wobei das dritte Planetenrad (12) direkt mit einer Verzahnung ineinandergreift, die fest mit der Welle (2) verbunden ist.

12. Uhrmechanismus nach einem der Ansprüche 1 bis 6, wobei das erste, das zweite und das dritte Planetenrad (25, 27, 31) jeweils um eine Achse (25a, 27a, 31a) drehbar sind, die senkrecht zur Welle (21) ist, wobei das erste Planetenrad (25) mit dem ersten und dem dritten drehbaren Organ (24, 28) ineinandergreift und seine Achse (25a) fest mit dem vierten drehbaren Organ (29) verbunden ist, wobei das zweite Planetenrad (27) mit dem zweiten und dem dritten drehbaren Organ (26, 28) ineinandergreift und seine Achse (27a) fest mit einem fünften drehbaren Organ (30) verbunden ist, das drehbar um die Welle (21) gelagert ist, und das dritte Planetenrad (31) mit dem vierten und dem fünften drehbaren Organ (29, 30) ineinandergreift und seine Achse (31a) fest mit der Welle (21) verbunden ist.

13. Uhrmechanismus nach einem der Ansprüche 1 bis 12, wobei die Welle (2; 21) hohl ist, um den Durchgang von Anzeigezeigern zu ermöglichen.

## Claims

1. Timepiece mechanism comprising a differential, the differential comprising:
- an input/output shaft (2; 21),
- first, second, third and fourth rotating members (6, 8, 10, 11; 24, 26, 28, 29) mounted so as to be mobile with respect to each other, the first and second rotating members (6, 8; 24, 26) respectively defining a first and a second output/input (6a, 8a; 24a, 26a) of the differential, the third or fourth rotating member (10, 11; 28, 29) defining a third output/input (10a; 28a) of the differential,
- a first planet gear (7; 25) associated with the first rotating member (6; 24) and forming, with the latter, a first stage of the differential,
- a second planet gear (9; 27) associated with the second rotating member (8; 26) and forming, with the latter, a second stage of the differential, and
- a third planet gear (12; 31) associated with the fourth rotating member (11; 29) and forming, with the latter, a third stage of the differential, this third stage connecting the first and second stage to each other,
**characterised in that** said first, second, third and fourth rotating members are mounted so as to be mobile about said shaft, and **in that** said second stage is connected to said first stage by said third rotating member.

2. Timepiece mechanism as claimed in claim 1, wherein an input/output toothed arrangement (5; 23a) is fixedly attached to the input/output shaft (2; 21), the first and second rotating members (6, 8; 24, 26) respectively comprise a first and a second output/input toothed arrangement (6a, 8a; 24a, 26a), and the third or fourth rotating member (10, 11; 28, 29) comprises a third output/input toothed arrangement (10a; 28a).

3. Timepiece mechanism as claimed in claim 2, wherein the third rotating member (10; 28) comprises said third output/input toothed arrangement (10a; 28a).

4. Timepiece mechanism as claimed in claim 3, wherein the fourth rotating member (11; 29) comprises a fourth output/input toothed arrangement.

5. Timepiece mechanism as claimed in any one of claims 1 to 4, wherein the third stage is located between the first stage and the second stage.

6. Timepiece mechanism as claimed in any one of claims 1 to 5, wherein the fourth rotating member (11; 29) and the third planet gear (12; 31) are located at least partially within the third rotating member (10; 28).

7. Timepiece mechanism as claimed in any one of claims 1 to 6, wherein the first rotating member (6) bears the first planet gear (7), the second rotating member (8) bears the second planet gear (9), the fourth rotating member (11) bears the third planet gear (12) and is connected via gearing to the second planet gear (9), the third planet gear (12) is connected via gearing to the shaft (2) and to the first planet gear (7), and the third rotating member (10) is connected via gearing to the first planet gear (7) and to the second planet gear (9).

8. Timepiece mechanism as claimed in claim 7, wherein the fourth rotating member (11, 11b) comprises a toothed arrangement which meshes directly with the second planet gear (9).

9. Timepiece mechanism as claimed in claim 7 or 8, wherein the third rotating member (10, 10b, 10d) comprises toothed arrangements which mesh directly with the first and second planet gears (7, 9) respectively.

10. Timepiece mechanism as claimed in any one of claims 7 to 9, wherein the first and third planet gears (7, 12) mesh with each other via a mobile (13) mounted about the shaft (2).

11. Timepiece mechanism as claimed in any one of claims 7 to 10, wherein the third planet gear (12) meshes directly with a toothed arrangement fixedly attached to the shaft (2).

12. Timepiece mechanism as claimed in any one of claims 1 to 6, wherein the first, second and third planet gears (25, 27, 31) each pivot about an axis (25a, 27a, 31a) perpendicular to the shaft (21), the first planet gear (25) meshes with the first and third rotating members (24, 28) and its axis (25a) is rigidly connected to the fourth rotating member (29), the second planet gear (27) meshes with the second and third rotating members (26, 28) and its axis (27a) is rigidly connected to a fifth rotating member (30) mounted so as to be mobile about the shaft (21), and the third planet gear (31) meshes with the fourth and fifth rotating members (29, 30) and its axis (31a) is rigidly connected to the shaft (21).

13. Timepiece mechanism as claimed in any one of claims 1 to 12, wherein the shaft (2; 21) is hollow to allow shafts of indicating hands to pass therethrough.
